# EUROPÄISCHE PATENTSCHRIFT

(11) **EP 3 057 814 B1**
(45) Veröffentlichungstag und Bekanntmachung des Hinweises auf die Patenterteilung: **23.10.2019**
(21) Anmeldenummer: 14795944.9
(22) Anmeldetag: 10.09.2014
(51) Int. Cl.: B60G 17/005, B60G 11/27

(54) **VORRICHTUNG ZUR ACHSANHEBUNG**
AXLE RAISING DEVICE
DISPOSITIF PERMETTANT DE SOULEVER DES ESSIEUX

(30) Priorität: 16.10.2013 DE 102013017171
(43) Veröffentlichungstag der Anmeldung: 24.08.2016
(73) Patentinhaber: Michalke, Günter, 37085 Göttingen (DE)
(72) Erfinder: Michalke, Günter, 37085 Göttingen (DE)
(74) Vertreter: Köhler, Tobias
(86) Internationale Anmeldenummer: PCT/EP2014/002441
(87) Internationale Veröffentlichungsnummer: WO 2015/055268

(56) Entgegenhaltungen:
- EP-A1- 0 373 681
- EP-A2- 0 514 944
- WO-A1-00/41903
- DE-A1- 19 840 756
- DE-A1-102010 026 468

## Beschreibung

Die Erfindung betrifft eine Vorrichtung zum Anheben von Achsen von LKW- Anhängern und Sattelaufliegern, insbesondere bei Schäden an einzelnen Rädern, Reifen oder Achsen.

Treten bei LKW- Anhängern und Sattelaufliegern Schäden an einzelnen Rädern, Reifen oder Achsen Schäden auf, so sind die Fahrer meist gezwungen eine Reparatur dieses Schadens auf der Landstraße oder der Autobahn durchzuführen. Dabei sind die Fahrer einer hohen Gefährdung durch den fließenden Verkehr ausgesetzt.
Durch das Stehen des LKW werden nicht selten auch Staus ausgelöst und somit eine weitere Gefährdungssituation ausgelöst.

Um diese direkte Gefährdung abzuwenden ist festzustellen, dass nicht selten die Fahrzeuge mit den Defekten bis zum Erreichen eines geeigneteren Standortes für die Reparatur weiter gefahren werden. Hierdurch wiederum entstehen, wie auch durch auftretende Reifenbrände, Beschädigungen am Fahrzeug und an der Fahrbahn.

In DE 60003694 wird eine Achsen/Aufhängungsanordnung mit einem Aufhängungsträger zur lagernden Anbringung einer Achse an der Unterseite eines Fahrzeugs und einer Achsenhebeanordnung beschrieben, die ein Krafterzeugungsmittel umfasst, das betätigt werden kann, um eine Kraft zum Anheben des Aufhängungsträgers zu erzeugen, dadurch gekennzeichnet, dass das Krafterzeugungsmittel angrenzend an und unterhalb des Trägers angeordnet ist und im Wesentlichen horizontal auf eine Auflage wirkt, die vom Träger nach unten vorragt, um den Träger anzuheben, wobei ein Freiraum unterhalb des Trägers auf der anderen Seite der nach unten vorragenden Auflage die Anordnung einer Bremskammer mit Fahr/Park-Doppelfunktion ebenfalls angrenzend und unterhalb des Trägers ermöglicht.

DE 69102784 beschreibt eine Einheitliche Handhabungsvorrichtung für die Hinterachse eines Straßenfahrzeuges oder eines Anhängers.

Diese Erfindung beschreibt eine Einheit zum Betätigen einer Radachse am rückwärtigen Fahrgestell eines Straßenfahrzeugs oder eines Anhängers mit einem Radaufhängungslenker, einem Luftfederbalg und dessen Stoßdämpfer, welche zwischen einem angelenkten Rückstellteil und dem Radaufhängungslenker angebracht sind, wobei letzterer eine kippbare Aufhängungseinheit bildet, welche durch eine pneumatische Betätigungseinrichtung in Kippbewegung versetzt wird, die direkt auf die Radachse, das Rückstellteil oder das Ende des Radaufhängungslenkers wirkt, welche nacheinander durch eine Verriegelung mit pneumatischer Steuereinrichtung blockiert werden.

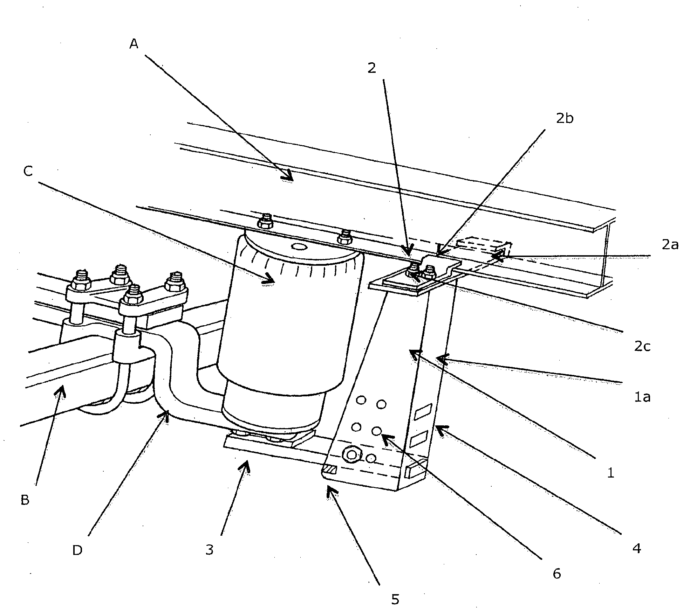

WO-A-00/41903 zeigt in Figur 1 eine Vorrichtung zum Anheben von Achsen nach dem Oberbegriff des Anspruchs 1, wobei die Vorrichtung aus einem an dem Fahrgestelllängsträger befestigten Haken besteht. DE-A-10 2010 026 468 offenbart eine ähnliche Vorrichtung.

Nachteilig bei den bekannten Vorrichtungen zum Anheben einer einzelnen Achse ist die relativ komplexe technische Lösung, welche in das Fahrzeug integriert wird und dadurch einen hohen Kostenaufwand mit sich bringt.

Die Aufgabe der Erfindung besteht darin, eine einfache technische Lösung zu finden, welche durch vergleichsweise geringe Kosten verursacht und dadurch finanzielle Anschaffungshindernisse bei den Fuhrunternehmern überwindet und dem Spediteur Kostenersparnis und Zeitgewinn durch die Möglichkeit eines schnelles Weiterfahrens bringt.

Die Aufgabe wird durch die erfindungsgemäße Vorrichtung gemäß des Hauptanspruchs gelöst. Weitere Ausgestaltungen der erfindungsgemäßen Lösungen sind in den Unteransprüchen beschrieben.

Die erfindungsgemäße Vorrichtung zur Achsanhebung wird anhand der Abbildung 1 gezeigt und nachfolgend näher erläutert.

Die Radaufhängung an Achsen von LKW- Anhängern und Sattelaufliegern besteht, vereinfacht dargestellt, aus einem Fahrgestelllängsträger A, einer Achse B und einem zwischen diesen als Federelement angeordneten Luftbalg C, welcher vorzugsweise auf einer an der Achse B befestigten Feder D montiert ist. Dabei ist der Luftbalg C an das zentrale Pneumatiksystem des Fahrzeuges angeschlossen, welches den Luftdruck im Luftbalg C steuert.

Die erfindungsgemäße Vorrichtung besteht aus einem Träger 1, einer an seinem Ende angeordneten oberen Aufhängung 2 sowie einer an seinem unteren Ende angeordneten unteren Aufnahmeplatte 3, welche ca.90° zu der Längsachse des Trägers 1 angeordnet ist .

Wird an einer Achse beispielsweise ein Reifenschaden festgestellt, so wird mit der Höhenverstellung des Aufliegers die Luft von allen Luftbälgen C bis zur niedrigsten Stufe abgelassen. Die erfindungsgemäße Vorrichtung wird hinter dem Luftbalg C des beschädigten Reifens so eingeführt und mit der oberen Aufhängung 2 an dem Fahrgestelllängsträger A so eingehängt, dass der Träger 1 so weit an dem Luftbalg C des beschädigten Reifens herangeführt wird, dass die untere Aufnahmeplatte 3 mit ihrem dem Träger 1 abgewandten Ende unter den den Luftbalg C tragenden Bereich der Feder D der Achse B des beschädigten Reifens greift. In dieser Lage wird die erfindungsgemäße Vorrichtung durch eine geeignete technische Lösung am Längsträger A fixiert.

Wird nun durch die Höhenverstellung des Aufliegers die Fahrhöhe wieder hergestellt, ist die Achse B durch die erfindungsgemäße Vorrichtung in ihrer Lage zum Fahrgestelllängsträger A fixiert und das Rad mit dem beschädigten Reifen wird so weit angehoben, dass es nicht mehr mitläuft.

Nunmehr ist eine Weiterfahrt zu einem geeigneten Reparaturplatz oder in eine Werkstatt möglich. Bei entsprechender Ladung ist es sogar möglich mit dem Fahrzeug längere Strecken zurückzulegen.

Nachfolgend soll die erfindungsgemäße Vorrichtung anhand von Ausführungsbeispielen näher erläutert werden.

Der Träger 1 ist erfindungsgemäß u-förmig ausgeführt, wobei die offene Seite des U-Profils dem Luftbalg C zugewandt ist.

Der Träger 1 entspricht, wie vorstehend schon beschrieben, in seiner Länge in etwa der Höhe des Luftbalges C in leerem, zusammengepressten Zustand.

Da in den unterschiedlichen Fahrzeugtypen entsprechend den jeweiligen Anforderungen auch verschiedene Pneumatiksysteme mit verschieden großen Luftbälgen C zur Anwendung kommen, wird vorgeschlagen, die erfindungsgemäße Vorrichtung so zu gestalten, dass sie bei verschieden großen Luftbälgen C eingesetzt werden kann.

Dies kann beispielsweise dadurch realisiert werden, dass die untere Aufnahmeplatte 3 in verschiedenen Positionen am Träger 1 angeordnet werden kann.

Dies ist dadurch realisiert, dass die Aufnahmeplatte 3 mit dem Träger 1 nicht fest verbunden ist, sondern mit ihrer dem Träger 1 zugewandten Seite in die offene Seite des U-Profils des Trägers 1 eingeführt und in einen in seiner Form dem Profil der unteren Aufnahmeplatte 3 entsprechenden Durchbruch zur Höhenverstellung 4 in der Rückwand des U-Profils 1a eingesetzt wird. An der offenen Seite des U-Profils 1a des Trägers 1 sind Auflagen 5 für die Aufnahrneplatte 3 angeordnet.

Diese Auflagen 5 sind dabei so angeordnet, dass die untere Aufnahmeplatte 3, wenn die erfindungsgemäße Vorrichtung am Fahrgestelllängsträger A eingehangen ist, parallel zu diesem liegt.

Bei Verwendung der erfindungsgemäßen Vorrichtung für verschiedene Fahrzeugtypen sind in den Träger 1 in entsprechenden Abständen über die Länge des Trägers 1 verteilt mehrere Kombinationen von Durchbrüchen zur Höhenverstellung 4 sowie entsprechend beabstandeten Auflagen 5 einzubringen.

Zur weiteren Sicherung der Lage der unteren Aufnahmeplatte 3 im Träger können Fixierungen 6 angeordnet werden. Diese sind gemäß der erfindungsgemäßen Lösung bei eingesetzten unteren Aufnahmeplatten 3 zwischen dem Durchbruch zur Höhenverstellung 4 und der Auflage 5 oberhalb der unteren Aufnahmeplatte 3 anzuordnen. In besonderer Ausgestaltung der erfindungsgemäßen Lösung können hierzu beispielsweise Bohrungen in die Seitenwände des U-Profiles eingebracht werden, durch welche dann Schrauben geführt und mit Muttern gesichert werden.

Die obere Aufhängung 2 ist so gestaltet, dass sie an dem Fahrgestelllängsträger A eingehängt werden kann.

Üblicherweise sind die Fahrgestelllängsträger A aus Doppel-T-Profilen gefertigt. Die obere Aufhängung 2 ist deshalb vorzugsweise so gestaltet, dass sie mit einem Ende 2a formschlüssig eine Seite des unteren Schenkels des Doppel-T-Profilen umgreift und die andere Seite mittels einer in Richtung des Profils verschiebbaren Klemmeinrichtung 2b, welche vorzugsweise ebenfalls formschlüssig die andere Seite des unteren Schenkels des Doppel-T-Profils umgreift und lösbar in dieser Lage zu fixieren ist.

Hierzu sind alle sinnvoll einsetzbaren bekannten Klemmmöglichen denkbar, bevorzugt wird allerdings ein Fixieren mittels Klemmschrauben 2c wie in der Abbildung 1 beispielhaft dargestellt

Eine einfachere Ausführungsform ist einsetzbar, wenn die erfindungsgemäße Vorrichtung für nur eine Fahrzeugtype Verwendung finden soll.

Für diese Verwendung ist nur eine Lage der unteren Aufnahmeplatte 3 erforderlich. Dem folgend kann diese Aufnahmeplatte 3 deshalb in der erforderlichen Lage fixiert angeordnet werden.

Auch technisch sinnvoll ist die erfindungsgemäße Ausführungsform, in welcher die untere Aufnahmeplatte 3 so angeordnet ist, dass sie in das U-Profil des Trägers 1 um einen im U-Profil angeordneten Drehpunkt hinein geklappt werden kann. Bei dieser Ausführung sind wiederum Auflagen 5 erforderlich, welche als Auf- und Widerlager wirken.

Vorteilhafterweise ist es mit der erfindungsgemäßen Vorrichtung möglich, das beschädigte Fahrzeug in kürzester Zeit, ca. in 10 min, in einen Zustand zu versetzen, mit welchem es ermöglicht wird, das Fahrzeug an einen für eine weitere Reparatur geeigneten Ort zu verbringen.

Da die erfindungsgemäße Vorrichtung sehr kostengünstig ist, ist es weiterhin von Vorteil, jedes Fahrzeug, unabhängig davon, ob es sich bei der Vorrichtung um die Variante für verschiedene Bauarten des Fahrzeuges oder eine fahrzeugspezifische Ausgestaltung der Vorrichtung handelt, mit solch einer Vorrichtung auszustatten.

## Patentansprüche

1. Vorrichtung zum einseitigen Anheben von Achsen von LKW- Anhängern, Sattelaufliegern und ähnlichen Fahrzeugen, aufweisend einen Fahrgestelllängsträger (A), Achsen (B) und einem zwischen diesen als Federelement angeordneten Luftbalg (C), wobei der Luftbalg (C) an das zentrale Pneumatiksystem des Fahrzeuges angeschlossen ist, welches den Luftdruck im Luftbalg (C) steuert, **dadurch gekennzeichnet, dass** die Vorrichtung besteht aus einem Träger (1), einer an seinem oberen Ende angeordneten oberen Aufhängung (2), welche an dem Fahrgestelllängsträger (A) eingehängt und fixiert werden kann, sowie einer an seinem unteren Ende angeordneten unteren Aufnahmeplatte (3), welche ca 90° zu der Längsachse des Trägers (1) angeordnet ist und welche mit ihrem dem Träger (1) abgewandten Ende unter den Luftbalg (C) reicht, besteht und der Träger (1) u-förmig ausgeführt ist, wobei die offene Seite des U-Profiles dem Luftbalg C zugewandt ist und der Träger (1) in seiner Länge in etwa der Höhe des Luftbalges C in leerem, zusammengepressten Zustand entspricht und die untere Aufnahmeplatte (3) so angeordnet ist, dass sie in das U-Profil des Trägers (1) um einen im U-Profil angeordneten Drehpunkt hinein zuklappen ist und Auflagen (5) in dem U- Profil angeordnet sind, welche Auf- und Widerlager sind.

2. Vorrichtung nach Anspruch 1, **dadurch gekennzeichnet, dass** die obere Aufhängung (2) so gestaltet ist, dass sie mit einem Ende (2a) formschlüssig eine Seite des unteren Schenkels des Doppel-T-Profilen umgreift und die andere Seite mittels einer in Richtung des Profiles verschiebbaren Klemmeinrichtung (2b), welche vorzugsweise ebenfalls formschlüssig die andere Seite des unteren Schenkels des Doppel-T-Profiles umgreift und lösbar in dieser Lage zu fixieren ist

3. Vorrichtung nach einem der vorhergehenden Ansprüche, **dadurch gekennzeichnet, dass** die Aufnahmeplatte (3) mit ihrer dem Träger (1) zugewandten Seite durch die offene Seite des U-Profils des Trägers (1) in einen in seiner Form dem Profil der unteren Aufnahmeplatte (3) entsprechenden Durchbruch zur Höhenverstellung (4) in der Rückwand des U-Profiles 1a eingesetzt ist und an der offenen Seite des U-Profils 1a des Trägers (1) Auflagen (5) für die Aufnahmeplatte (3) angeordnet sind, wobei diese Auflagen (5) dabei so angeordnet sind, dass die untere Aufnahmeplatte (3), wenn die erfindungsgemäße Vorrichtung am Fahrgestelllängsträger (A) eingehangen ist, parallel zu diesem liegt.

4. Vorrichtung nach einem der vorhergehenden Ansprüche zur Verwendung für verschiedene Fahrzeuge, **dadurch gekennzeichnet, dass** die untere Aufnahmeplatte (3) in verschiedenen Positionen am Träger (1) anzuordnen ist, wobei der Träger (1) mehrere Position zum Einsetzen der unteren Aufnahmeplatte (3) mit zugehörigen Auf- und Widerlagern aufweist.

5. Vorrichtung nach Anspruch 3 zur Verwendung für verschiedene Fahrzeuge, **dadurch gekennzeichnet, dass** in den Träger (1) in entsprechenden Abständen über die Länge des Trägers (1) verteilt mehrere Kombinationen von Durchbrüchen zur Höhenverstellung (4) sowie entsprechend beabstandeten Auflagen (5) angeordnet sind.

## Claims

1. Device for lifting axles on one side of lorry trailers, semitrailers, and similar vehicles having a longitudinal chassis rall (A), axles (B), and a pneumatic bellows (C) which is arranged between the latter as a spring element, whereby the air bellows (C) is connected to the central pneumatic system of the vehicle which controls the air pressure in the air bellows (C), **characterized In that** the device comprises a support (1), an upper suspension arranged at the upper end of the support (2), which can be hooked and fixed to the longitudinal chassis rail (A), as well as a lower receiving plate (3) on its lower end, which is arranged approximately 90° with respect to the longitudinal axis of the support (1) and the other end of which faces away from the support (1) and extends below the area of the air bellows (C) to support the alr bellows (C), and which the support (1) is U-shaped, whereby the open side of the U-profile faces the air bellows (C) and the support (1), the length of which corresponds approximately to the height of the air bellows (C) in the empty, compressed stated, whereby the lower mounting plate (3) is arranged in such a way that it can be pivoted around an axis arranged on the U profile, and with rests (5) arranged In the U profile, which are support and thrust bearings.

2. Device according to Claim 1, **characterized in that** the upper suspension (2) is designed In such a way that one form-fitted end (2a) wraps around one side of the lower leg of the double-T profile and the other side by means of a clamping device (2b) that can be moved in the direction of the profile, which preferably is also form-fitted and wraps around on the other side of the lower leg of the double-t profile, and can be detachably fixed in this position.

3. Device according one of the previous claims, **characterized in that** the receiving plate (3), with the side facing the support (1), is inserted into the rear wall of the U-profile (1a) through the open side of the U-profile of the support (1) via an aperture for height adjustment (4) with a shape corresponding to the profile of the lower receiving plate (3) and on which rests (5) are arranged on the open side of the U-profile (1a) of the support (1) to receive the receiving plate (3), whereby these rests (5) are arranged in such a way that the lower receiving plate (3), when the device according to the invention is hung on the longitudinal frame of the vehicle (A), lies parallel to the latter.

4. Device according to one of the previous claims for use in various vehicles, **characterized in that** the lower receiving plate (3) is fixed In different positions on the support (1), whereby the support (1) has several positions for Insertion of the lower receiving plate (3) with the associated support and thrust bearings.

5. Device according to Claim 3 for use in various vehicles, **characterized in that** a number of combinations of apertures in the support (1), which are distributed at corresponding intervals over the length of the support (1) for height adjustment (4), as well as correspondingly spaced rests (5) are arranged.

## Revendications

1. Dispositif de levage unilatéral d'essieux de remorques de camions, semi-remorques et véhicules similaires, présentant un longeron de châssis (A), des essieux (B) et un soufflet pneumatique (C) agencés entre ceux-ci en tant qu'éléments de suspension, le soufflet pneumatique (C) étant relié au système pneumatique central du véhicule qui régule la pression de l'air dans le soufflet pneumatique (C). Le dispositif est spécifique du fait que le dispositif est constitué d'un support (1), d'une suspension supérieure (2), qui est agencée à son extrémité supérieure et qui peut être accrochée et fixée au longeron du châssis (A), et d'une plaque de réception inférieure (3) qui est agencée à son extrémité inférieure et qui est disposée à environ 90° par rapport à l'axe longitudinal du support (1) et passe par son extrémité opposée au support (1) sous le soufflet d'air, et le support (1) est en forme de U, le côté ouvert du profilé en U faisant face au soufflet pneumatique C et le support (1) correspondant environ dans sa longueur à la hauteur du soufflet pneumatique C en état vide et comprimé, et la plaque de réception inférieure (3) est disposée de telle sorte qu'elle est repliée dans le profilé en U du support (1) autour d'un point de pivotement disposé dans le profilé en U et des surfaces d'appuis (5) sont disposés dans le profilé en U qui sont des appuis et des supports.

2. Dispositif selon la revendication 1, **caractérisé en ce que** la suspension supérieure (2) est conçue de telle sorte qu'une extrémité (2a) de celle-ci entoure, avec complémentarité de forme, un côté de la branche inférieure du profilé en double T et l'autre côté au moyen d'un dispositif de serrage (2b) coulissant en direction du profilé et qui entoure, de préférence aussi avec complémentarité de forme, l'autre côté de la branche inférieure du profilé en double T et est fixé dans cette position de manière amovible.

3. Dispositif selon l'une des revendications précédentes, **caractérisé en ce que** la plaque de réception (3) est insérée avec son côté tourné vers le support (1) à travers le côté ouvert du profil en U du support (1) dans une ouverture de réglage en hauteur (4) de la paroi arrière du profil en U la correspondant dans sa forme au profil de la plaque de réception inférieure (3) et des supports (5) sont disposés pour la plaque de réception (3) côté ouvert du profil en U la du support (1), ces supports (5) étant disposés de telle sorte que, lorsque le dispositif conforme à l'invention est suspendu au longeron du châssis (A), la plaque de réception inférieure (3) soit parallèle à cette dernière.

4. Dispositif selon l'une des revendications précédentes, destiné à être utilisé pour différents véhicules, **caractérisé en ce que** la plaque de réception inférieure (3) doit être disposée dans différentes positions sur le support 1, ledit support (1) présentant plusieurs positions pour l'Insertion de la plaque de réception inférieure (3) avec des appuis et support associés.

5. Dispositif selon la revendication 3 destiné à être utilisé dans différents véhicules, **caractérisé en ce que** plusieurs combinaisons d'ouvertures pour le réglage en hauteur (4) ainsi que des supports (5) espacés de manière correspondante sont disposées dans le support (1) à des intervalles correspondants sur la longueur du support (1).
